# EUROPEAN PATENT APPLICATION

(11) **EP 0 540 442 A2**
(43) Date of publication of application: **05.05.1993**
(21) Application number: 92480122.8
(22) Date of filing: 11.09.1992
(51) Int. Cl.: G06F 15/20, G06F 15/21, G06F 3/033

(54) **Integrated display of project schedule and resource planning calendar**

(30) Priority: 29.10.1991 US 784194
(71) Applicant: International Business Machines Corporation, Armonk, N.Y. 10504 (US)
(72) Inventor: Haynes, Thomas R., Euless, TX 76039 (US); Kahl, Daryl J., Flower Mound, TX 75028 (US); Lee, Raymond E., Irving, TX 75060 (US); Torres, Robert J., Colleyville, TX 76034 (US)
(74) Representative: de Pena, Alain

(57) **Abstract**

A user is prompted to provide a description of a project. A project list is generated specifying milestone dates, required resources and time requirements for each required resource. The time requirements are then mapped onto each resource calendar as a function of the milestone dates and the restrictions known to the scheduler. The resource calendar is opened to conform the calendar with additional scheduling restrictions, if any, known to the resource or a resource manager.

## Description

The invention relates in general to automated event and task scheduling, and more particularly, to methods for integrating a project planning schedule into a resource calendar. Still more particularly, the invention relates to methods for generating a visual display of a resource scheduling calendar including project schedule parameters for presentation to a user and for user interaction with the resource scheduling calendar.

The development of a new product typically requires the coordination of the efforts of numerous individuals and assured availability of design and test equipment, all delivered at the appropriate time to achieve milestone dates established by a goal oriented product planning calendar. Such coordination has remained, despite the availability of calendar programs for execution on digital computers, a considerable burden to a participant in the planning process.

Planning and scheduling calendars have long been available on personal computers. Where a computer is part of a network, such calendars can be called and scanned to determine common available times between users for scheduling of meetings or other activities. Later improvements in such programs have provided the ability to read calendars and provide listings of commonly available times and dates. See for example U.S. Patent No. 5,050,077 issued to Vincent and assigned to the assignee of the present patent.

However, such programs fail to address all of the problems faced in scheduling the development of a product. One of these problems is that a project typically requires dedication of a particular resource to that project for a certain minimum time within a predetermined period to achieve a milestone date. The time demands made of a particular resource must be met if product introduction dates are to be met. Conflict resolution systems have not generally accommodated such problems.

It is therefore one object of the present invention to provide automated task scheduling relating to a project.

It is another object of the present invention to provide methods for integrating project planning into resource calendar information.

It is yet another object of the present invention to provide for generating a visual display of a resource scheduling calendar including project schedule parameters for presentation to a user and for user interaction with resource information on the resource scheduling calendar.

The foregoing is achieved as is now described. A user is prompted to provide a description of a project. A project list is generated specifying milestone dates, required resources and time requirements for each required resource. The time requirements are then mapped onto each resource calendar as a function of the milestone dates and the restrictions known to the scheduler. The resource calendar is opened to conform the calendar with additional scheduling restrictions, if any, known to the resource or a resource manager.

The above as well as additional objects, features, and advantages of the invention will become apparent in the following detailed description.

The novel features believed characteristic of the invention are set forth in the appended claims. The invention itself however, as well as a preferred mode of use, further objects and advantages thereof, will best be understood by reference to the following detailed description of an illustrative embodiment when read in conjunction with the accompanying drawings, wherein:
Figure 1 is a pictorial representation of windows opened on a computer display screen illustrating execution of a resource calendar and a project editor;
Figure 2 is a pictorial representation of the resource calendar and project editor window of Figure 1 after certain user manipulations;
Figure 3 is a pictorial representation wherein the calendar window has been opened over the project editor window;
Figure 4, depicts a flow diagram of the software operations performed in generating an integrated calendar relating to project and non-project scheduling of a resource in accordance with the present invention.
Figure 5, depicts a flow diagram of the software operations performed in generating an integrated calendar relating to project and non-project scheduling of a resource in accordance with the present invention.
Figure 6, depicts a flow diagram of the software operations performed in generating an integrated calendar relating to project and non-project scheduling of a resource in accordance with the present invention.
Figure 7, depicts a flow diagram of the software operations performed in generating an integrated calendar relating to project and non-project scheduling of a resource in accordance with the present invention.

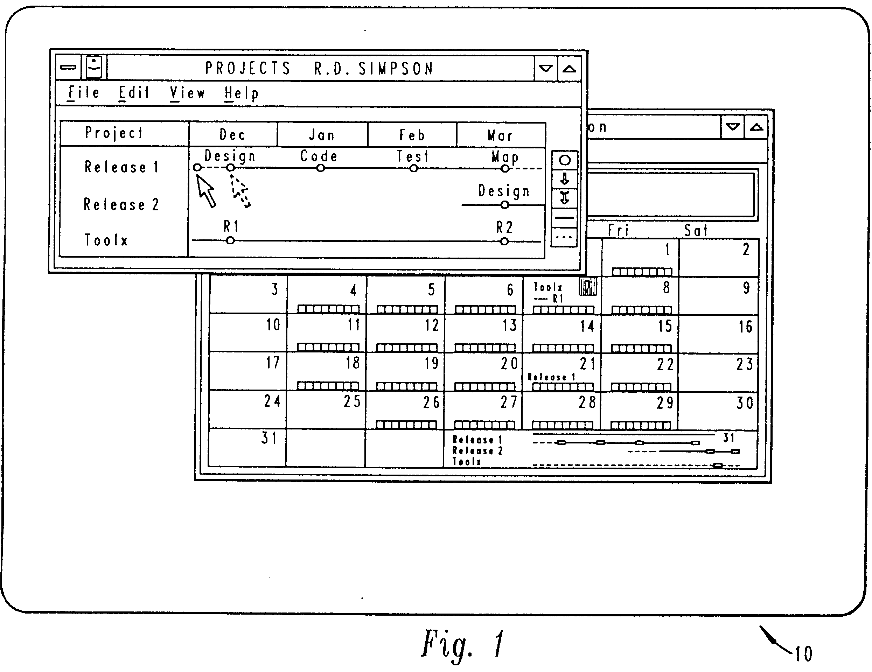

With reference now to the figures and in particular with reference to Figure 1, there is depicted a pictorial representation of display and user interaction screen 10 such as generated by a personal computer operating on a local area network which provides access to a program for generating calendars and project scheduling information. Display interaction screen 10 is typically displayed to a human engineer or programmer assigned to a product development project as a resource, or to a resource manager, where the resource is non-human and the resource manager is responsible for its scheduling.

Two windows are opened on screen 10 illustrating execution of a project scheduler and a resource calendar. The window for the project scheduler is opened over the resource calendar. The project scheduler name bar identifies the project and a resource. A menu bar provides for selection of modes of display of the program. Within a display field is milestone scheduling information relating to each of two products, Release 1 and Release 2. Within a display field, direct manipulation techniques may be used to change milestone dates for a project or to relate a particular resource to product development time line segments. A tool line at the bottom of the display field in the window relates to resources associated with the product time line segments. As illustrated a first resource "R1" is associated with the project titled "Release 1" from project inception until release.

Each of several resources may be selected through the name bar for the project appearing at the top of the window. The assignment of particular resources to a project, the designation of those resources to apply a given number of hours to the project and the establishment of milestone dates in development of the project provide a description of a project.

Underlying the project scheduling window is a window opened on a resource calendar which shows an individual or resource schedule on a month-by-month basis. Time bar graphs appear in each scheduled work day. Work days are the permitted dates for assignment of time for a project schedule or period. Weekend days and paid holidays may initially be excluded from receiving allocation of scheduled work time. Each bar graph is demarcated to indicate available blocks of time, typically hours, and the position of the blocks may be indicative of particular time of day at which the block occurs. In the lower right hand column corner of the calendar window appear projects time lines assigned to a particular resource. An alternative mode of display for time assignment is a clock face.

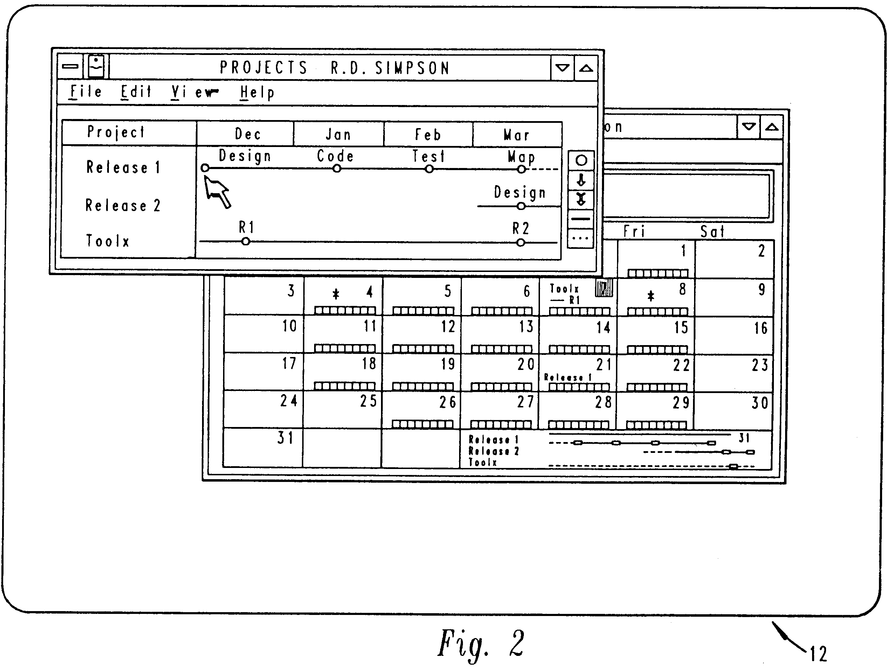

Figures 1 and 2 taken together illustrate the use of direct manipulation techniques to change the description of a project. To change a time line in the project scheduling window a mouse pointer is used to select a line segment for extension or contraction. This moves a milestone date. Between Figures 1 and 2 the milestone date for design of a product is moved from mid-December to early December. Direct manipulation techniques are preferably provided by graphic user interface such as the Presentation ManagerTM system available from International Business Machines Corporation. The visual display interaction screen 12 of Figure 2 illustrates completed movement of the milestone date and, in addition, illustrates allocation of time for project work to six dates of a resource calendar appearing in the lower window. Assignment of time to the project within the calendar is indicated by shading the blocks of the time bar graphs black. Other assigned time on the graph may be indicated by hatching tones of grey or coloring if a color monitor is used. "Open" or unshaded boxes indicate available time. For purposes of the example, it is assumed that the scheduler has attempted to assign all the time available on the following dates of a month: the first; the fourth; the fifth; the sixth; the seventh; and the eighth. However, the fourth and the eighth already had previously scheduled events preventing allocation of all of the time on those two dates to the project. The dates where conflicts have appeared are starred.

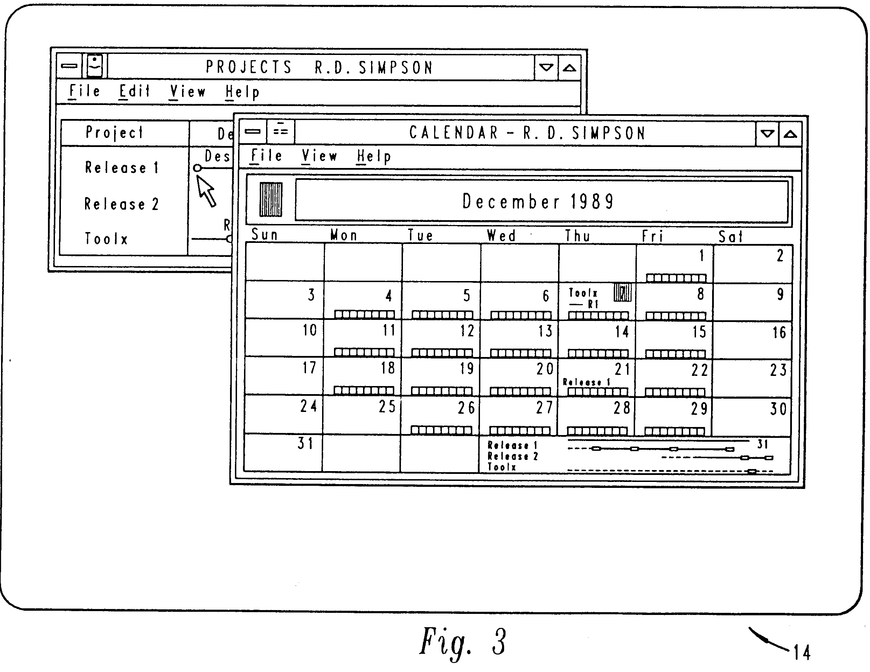

Visual display interaction screen 14 of Figure 3 illustrates a user calendar opened over a project scheduler. Through the calendar the user may reschedule events or project allocated time to eliminate conflicts in his personal schedule. Here direct manipulation techniques have been used to move project allocated time from the fourth and the eighth to ,the second of the month. The stars formerly appearing December 4 and December 8 are gone. Allocated time can be moved to any open time block in the month or to an otherwise non-permitted date such as a holiday or a weekend. As illustrated here the user has chosen to reallocate the time to a Saturday, a non×permitted date for automatic scheduling.

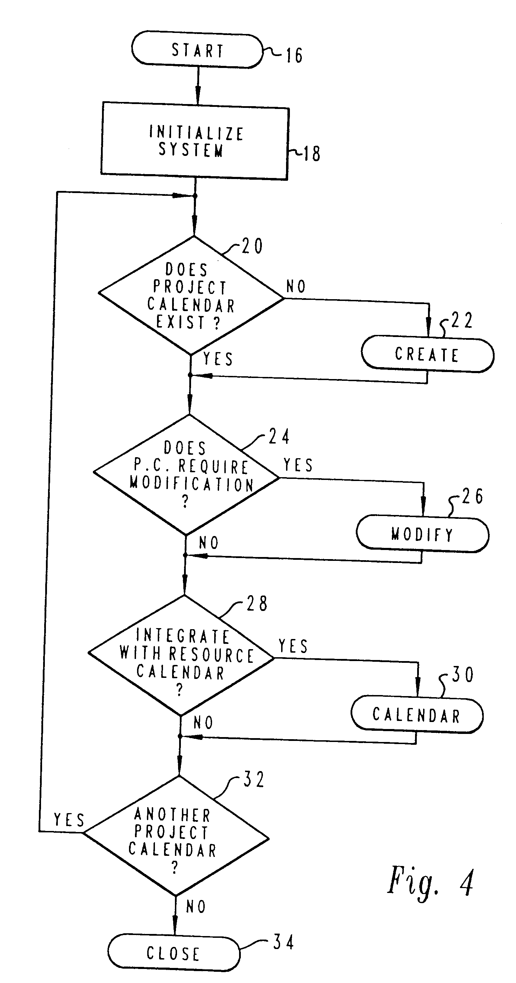

Figures 4 - 7 depict logic flow diagrams of software operations performed in creating a project schedule and consequent resource calendars from the prompted project description. First, based upon operator keyboard entries, program operation is initialized at steps 16 and 18 which direct generation of the appropriate windows and loading into a computer memory of the programs and required data for operation of the programs. At decision block 20, the program determines whether a project calendar exists. Along the NO decision branch program execution is transferred to a project calendar CREATE routine indicated at block 22. Upon creation of the project calendar, or if the project calendar already exists for a particular project description, (the YES branch from decision block 20) operation of the program move to decision block 24. At block 24 it is determined if the project calendar requires modification. The YES branch from decision block 24 transfers operation to a MODIFY subroutine through block 26. A fter completion of the MODIFY routine at block 26 program execution rejoins the NO branch from decision block 24 at decision block 28. At decision block 28 it is determined whether integration with particular resource calendars are required. From the YES branch, operation is transferred to a CALENDAR subroutine for creation of the integrated resource CALENDAR. From the NO branch, or after completion of the calendar subroutine, it is determined at decision block 32 if another project calendar requires work. From the YES branch of block 32, program operation is returned to decision block 20. If no work is required on other project calendars, the routine is exited at block 34.

Now the specialized subroutines indicated by the CREATE routine 22, the MODIFY routine 26 and the CALENDAR routine at block 30 will be described.

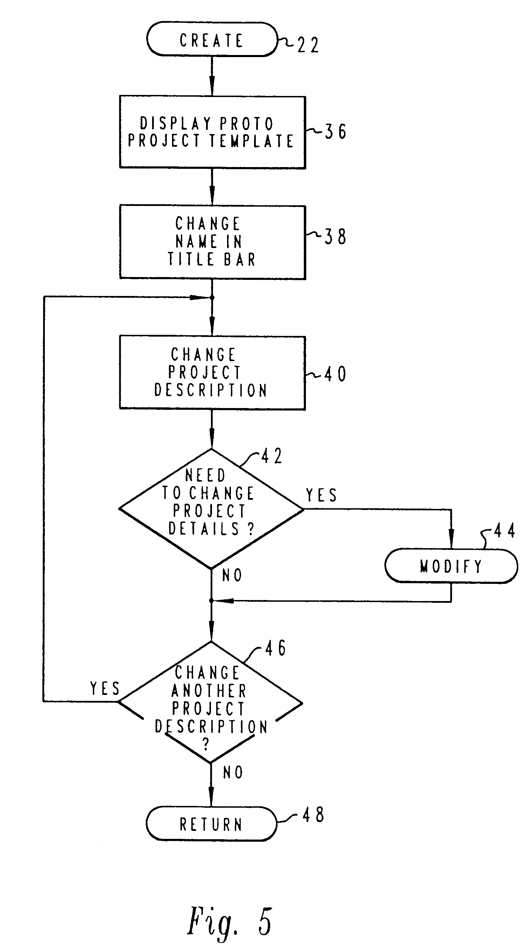

Figure 5 depicts a flow diagram of operations associated with a CREATE routine relating to generating a list of project details. From passing into the CREATE routine at step 22, block 36 is executed which provides for the display of a template for generation of project details. Such a template might include default milestone dates and a preliminary resource list. Next, at block 38, the name and the title bar of the proto project template is changed to the title for the project. Subsequent to the change of name, the project textual description is changed at block 40. Next, at decision block 42, it is determined whether there is a need to change any project details. From the YES branch of decision block 42, project execution is advanced to a MODIFY routine through block 44. Upon completion of the MODIFY routine, described below, execution is returned to the NO branch from decision block 42 to another decision block, block 46, which relates to inquiry as to whether another project description needs chan ging. The YES branch from block 46 returns project execution to block 40 for a change of project description. The NO branch for block 46 advances execution to the return block 48 which returns the program to the main program in Figure 4.

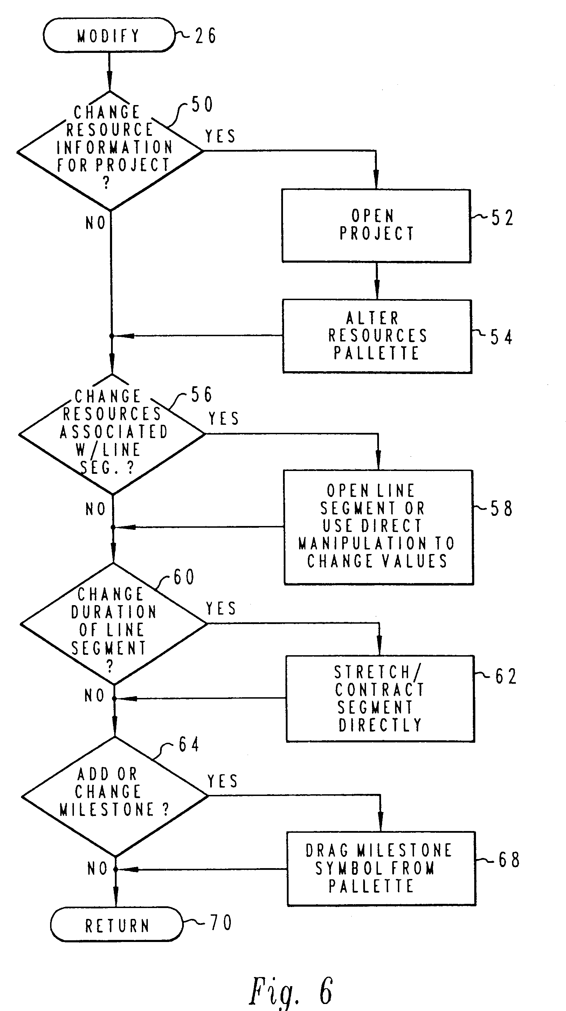

Figure 6 depicts a project calendar MODIFY routine entered through MODIFY block 26. Next, at decision block 50 it is determined whether resource information for a project requires changing. Where resource information is to be changed, the YES branch from block 50 is followed to block 52, where the project is opened and from there to block 54 where the resource pallette for the project is altered. Execution is returned to the NO branch from block 50 and execution advances to block 56, where it is determined whether resources associated with a certain time line segment require change.

If an addition, deletion, or change of a resource associated with a particular segment no line is required, the YES branch from decision block 56 is followed to block 58. At block 58 a line segment may be opened relating to a resource or direct manipulation techniques may be used to change a value associated with an existing line segment. From block 58, execution is returned to the NO branch from block 56. Next, at decision block 60, it is determined whether a change in duration of a time line segment is required. From the YES branch of decision block 60, operation block 62 is executed relating to stretching or contracting of a time line segment directly. From both the NO branch from block 60 and from block 62, block 64 is next executed. Decision block 64 relates to the addition or change of a milestone in the project schedule. Here, determination is made a line segment is to be added or divided if required. If a milestone change is required, the YES branch from decision block 64 directs operation t o block 68 or a milestone symbol may be pulled from a pallette using direct manipulation techniques and positioned at the appropriate point along the time line. From either the NO branch from decision block 64 or from block 68 operation is returned to the main program through block 70 to the appropriate location in Figure 4.

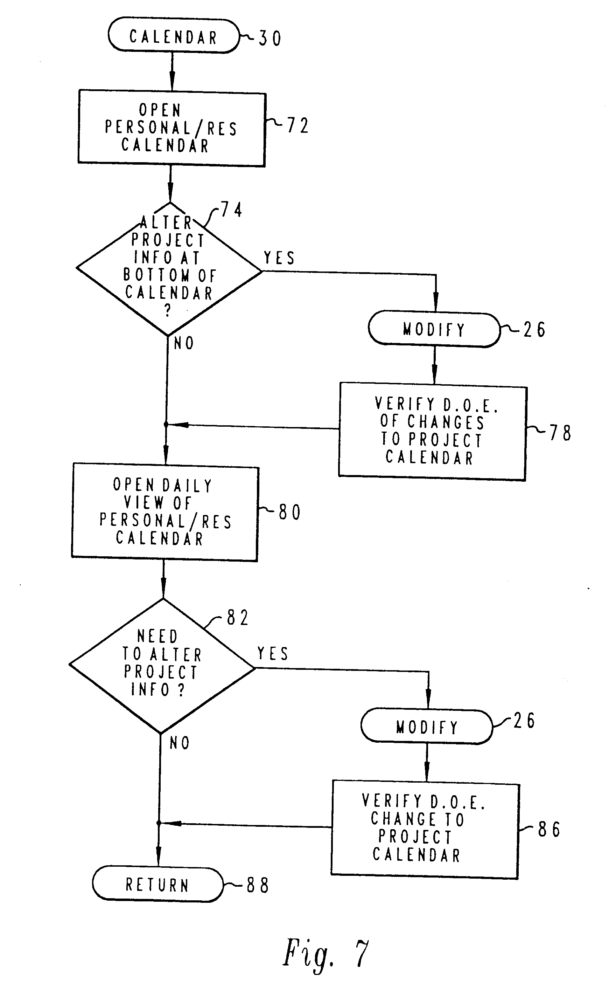

Figure 7 relates a CALENDAR routine allowing a resource or resource manager to alter calendar entries to conform the resource calendar with actual available time. From block 30, a personal calendar or resource calendar is opened at block 72. Next, decision block 74 is executed to determine if alteration of project information at the bottom of the personal calendar is required. Project information is changed by changing the project scheduler and accordingly the YES branch from decision block 74 leads to execution of the MODIFY routine discussed above, entered through MODIFY block 26. Execution is returned to block 78 instead of the main program in Figure 4 upon completion. At block 78 date of entry verification for changes to the project calendar is made. From both the NO branch of decision block 74 and from block 78 execution is advanced to block 80. At block 80, daily entries of the personal calendar are opened for direct manipulation, including movement of time blocks to non-permitted dates. Next, at block 82 it is determined if project information requires alteration as a consequence of changes in the personal calendar. The YES branch from block 82 returns execution to the MODIFY routine through block 26, which again is identical to that described above in relation to Figure6. Execution from the MODIFY routine is returned to block 86 for verification of date of entry changes to the project calendar and project execution is returned to the no branch from block 82 and returned through block 88 to the main program depicted in Figure4.

The present invention provides for integration of project management capabilities on the one hand and calendar capabilities on the other. A calendar view provides indication by use of color or highlighting of blocks of time as reserved for project and for non-project activities. Each calendar view is updated to reflect resource allocation appropriate to that view, for example, the illustration of a resource budget for particular project tasks. Thus a user of the calendar sees available blocks of time, (clear entries), scheduled blocks of time relating to non-project activities (shading), and time allocated to the project itself (black). Warning is provided to advise users of conflicts between scheduled project work and other events. Upon scheduling of more than 100 percent of available time the dates where conflicts occur are highlighted.

## Claims

1. A method for integrating a resource calendar with the project list, the method comprising the steps performed by a data processing system of:
generating the project list in response to user description of a project, wherein the project list specifies required resources and time requirements for each required resource;
mapping the time requirements for the required resource onto the resource calendar for the required resource;
opening the resource calendar for a required resource; and
correcting, in response to use selection, conflicts in the resource calendar.

2. A method for integrating a resource calendar with a projects requirements list as set forth in Claim 1 wherein the mapping steps comprise:
displaying the resource calendar for the required source on a video display device, the step of displaying including;
generating a first graphic indicating a block of time allocated to the project;
generating a second graphic indicating a block of time allocated to other matters, and
generating a third graphic indicating a managed block of time.

3. A method for integrating a resource calendar with a projects requirements list, as set forth in Claim 1, the mapping step further comprising:
displaying the resource calendar for the required source on a video display device, the step of displaying including;
generating a chart graphic in permitted dates identifying blocks of time;
attempting identification of a block of time in a chart graphic where allocated to the project; and
attempting identification of a block of time in a chart graphic where allocated to another matter.

4. A method for integrating a resource calendar with a projects requirements list as set forth in Claim 3, the method comprising the further step of:
moving an identified block of project allocated time to any selectable date in response to user selection.

5. A method for integrating a resource calendar with a projects require ments list as set forth in Claim 4, the method comprising the further step of:
highlighting a conflict where the attempts to identify blocks of time a s allocated to the project and to other matters exceeds in number the number of available blocks

6. A data processing system for integrating a project list into a resource calendar, the data processing system comprising:
means responsive to user description of a project for generating the pr oject list, wherein the project list specifies required resources and time requirements for each required resource;
means for mapping the time requirements for the required resource onto the resource calendar for a required resource;
means for opening the resource calendar for the required resource; and
means responsive to user selection for changing the mapping of time requirements on the resource calendar.

7. A data processing system as set forth in Claim 6 and further comprising:
a video display device;
graphic user interface means for generating a display image of the response calendar on the video display device;
means responsive to user selection for manipulating visual graphics;
a first visual graphic identifying time slots on permitted dates;
second visual graphic means for identifying time slots allocated to the project; and
third visual graphic means for identifying time slots allocated to other tasks.

8. A data processing system as set forth in Claim 7 and further compris ing:
means for highlighting and scheduling conflict time requirements mapping means maps excessive time requirements onto a permitted date.
